# EUROPÄISCHE PATENTSCHRIFT

(11) **EP 2 049 957 B1**
(45) Veröffentlichungstag und Bekanntmachung des Hinweises auf die Patenterteilung: **04.08.2010**
(21) Anmeldenummer: 07785694.6
(22) Anmeldetag: 04.08.2007
(51) Int. Cl.: G05B 19/406, G05B 19/418, G05B 23/02

(54) **VERFAHREN ZUR ÜBERWACHUNG EINES FERTIGUNGSVERFAHRENS**
METHOD FOR MONITORING A PRODUCTION PROCESS
PROCÉDÉ DESTINÉ À SURVEILLER UN PROCÉDÉ DE FABRICATION

(30) Priorität: 12.08.2006 DE 102006037952
(43) Veröffentlichungstag der Anmeldung: 22.04.2009
(73) Patentinhaber: MTU Aero Engines GmbH, 80995 München (DE)
(72) Erfinder: ECKSTEIN, Martin, 82178 Puchheim (DE); BREITKOPF, Günter, 80638 München (DE)
(86) Internationale Anmeldenummer: PCT/DE2007/001393
(87) Internationale Veröffentlichungsnummer: WO 2008/019654

(56) Entgegenhaltungen:
- US-A- 5 586 041
- US-A1- 2002 173 935

## Beschreibung

Die Erfindung betrifft ein Verfahren zur qualitätsrelevanten Überwachung eines Fertigungsverfahrens.

Die Qualität von mit Hilfe eines Fertigungsverfahrens hergestellter Bauteile beeinflusst in starkem Maß die Gebrauchsuigenschaften desselben. Dies gilt insbesondere für hoch beanspruchte Bauteile eines Gasturbinentlugtriebwerks. Hierbei bezieht sich die Qualität der Bauteile insbesondere auf die Maßhaltigkeit, die statische und dynamische Festigkeit sowie auf die Oberflächengüte der Bauteile. Die Qualität von hergestellten Bauteilen lässt sich zerstörungsfrei nur mit sehr großem Aufwand prüfen. Daher sind Verfahren zur Überwachung eines Fertigungsverfahrens von Interesse, mit welchen auf die Qualität der hergestellten Bauteile geschlossen werden kann.

Aus der Praxis sind Verfahren zur qualitätsrelevanten Überwachung eines Fertigungsverfahrens bekannt, bei welchen Signalverläufe von Parametern des Fertigungsverfahrens messtechnisch erfasst werden, wobei mehrere messtechnisch erfasste Signalverläufe, die einem korrekten und damit qualitativ hochwertigen Fertigungsablauf zugeordnet werden können, statistisch ausgewertet werden, um Sollverläufe für die messtechnisch erfassbaren Signalverläufe bereitzustellen. Zur qualitätsrelevanten Überwachung eines Fertigungsverfahrens werden dann messtechnisch erfasste Istverläufe der Signalverläufe mit den vorab ermittelten Sollverläufen für dieselben verglichen, wobei dann, wenn die Istverläufe von den Sollverläufen um mehr als ein definiertes Maß abweichen, auf ein qualitativ schlechtes Fertigungsverfahren geschlossen wird. Nach dem Stand der Technik sind zur Bereitstellung der Soll verläufe für die messtechnisch erfassbaren Signalverläufe demnach mehrere tatsächlich gemessene Signalverläufe von korrekten bzw. qualitativ guten Fertigungsabläufen erforderlich, um hieraus die Sollverläufe mit Hilfe stochastischer Auswertungen, d. h. durch Mitteilung über die Messungen, die damit signifikant sind, zu ermitteln. Ein derartiges Überwaehungsverfahren ist aus den Dokumenten US 2002/173935 A1 und US-A-5 586 041 bekannt. Sollen jedoch Bauteile in kleinen Losgrößen gefertigt werden, so ist die aus der Praxis bekannte Vorgehensweise zur qualitätsrelevanten Überwachung eines Fcrtigungsverfahrens ungeeignet.

Hiervon ausgehend liegt der vorliegenden Erfindung das Problem zu Grunde, ein Verfahren zur qualitätsrelevanten Überwachung eines Fertigungsverfahrens zu schaffen, das auch bei kleinen Losgrößen eine Überwachung ermöglicht. Dieses Problem wird durch ein Verfahren gemäß Anspruch 1 gelöst,

Das erfindungsgemäße Verfahren ist durch die folgenden Schritte gekennzeichnet: a) Zerlegen des Fertigungsverfahrens in eine Abfolge aus Einzelschritten, die durch eine Sequenz von Steuerbefehlen eines Fertigungsprogramms, welches zur Ausführung des Fertigungverfahrens auf einer Werkzeugmaschine auszuführen ist, definiert werden; b) Generieren mindestens einer Signalschablone je Einzelschritt des Fertigungsverfahrens, wobei jede Signalschsblocne aus den Steuerbefehlen des Fertigungsprogramms für den jeweiligen Einzelschritt, sowie aus dem jeweiligen Werkzeug, dem verwendeten Material und den Maschinenspezifika rechnerisch und damit theoretisch generiert wird, und wobei jede Signalschablone einem theoretischen Signalverlauf eines bei Ausführung des Fertigungsvcrfahrens messtechisch erfassbaren Parameters entspricht.

Im Sinne des erfindungsgemäßen Verfahrens wird vorgeschlagen, das hinsichtlich seiner Qualität zu überwachende Fertigungsverfahren in eine Abfolge aus Einzelschritten zu untergliedem, wobei für jeden Einzelschritt mindestens eine Signalschablone aus den Steuerbefehlen der Einzelschritte rechnerisch generiert wird.

Die Signalschablonen gelben Sollverläufe für Signalverläufe von Parametern des Fertigungsverfahrens vor, wobei es sich bei diesen Signalschablonen erfindungsgemäß um theretisch, rechnerisch ermittelte Sollverläufe und nicht wie im Stand der Technik um aus realen Signalverläufen über statistische Auswertungen generierte Sollverläufe handelt. Dies hat den Vorteil, dass das crfindungsgemäße Verfahren auch dann zur qualitätsrelevanten Überwachung eines Fertigungsverfahrens herangezogen werden kann, wenn Bauteile mit relativ kleinen Losgrößen mit dem zu überwachenden Fertigungsverfahren hergestellt werden sollen.

Vorzugsweise wird die Toleranz jeder Signalschablone durch eine den theoretischen Signalverlauf einhüllende Obergrenze und Untergrenze definiert, wobei die Obergrenze und Untergrenze zusammen mit der Signalschablone aus den Steuerbefehlen der Einzelschritte generiert wird.

Nach einer vorteilhaften Weiterbildung der Erfindung werden für solche Parameter Signalschablonen sowie vorzugsweise entsprechende Obergrenzen und Untergrenzen generiert, die ohne zusätzliche Sensoren an der Werkzeugmaschine erfasst werden können.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

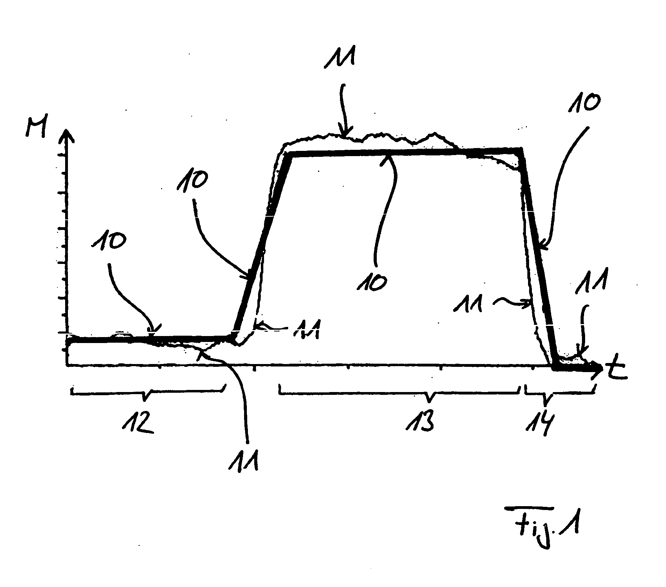

- Fig. 1: ein Diagramm mit einer für einen Einzelschritt des Bohrens generierten Signal- schablone und mit einem entsprechenden, gemessenen Signalverlauf.

Die hier vorliegende Erfindung betrifft ein Verfahren zur qualitätsrelevanten Überwachung eines Fertigungsverfahrens, insbesondere eines spanenden Fertigungsverfahrens. Nachfolgend wird die Erfindung für den Fall beschrieben, dass es sich bei dem zu überwachenden Fertigungsverfahren um Bohren handelt.

Im Sinne der hier vorliegenden Erfindung wird das zu überwachende Fertigungsverfahren in eine Abfolge aus Einzelschritten zerlegt bzw. untergliedert, wobei die Einzelschritte durch eine Sequenz von Steuerbefehlen eines Fertigungsprogramms definiert werden, welches zur Ausführung des Fertigungsverfahrens auf einer Werkzeugmaschine auszuführen ist. Bei diesem Fertigungsprogramm handelt es sich dabei insbesondere um ein NC-Programm. Wird als Fertigungsverfahren Bohren hinsichtlich qualitätsrelevanter Parameter überwacht, so wird das Fertigungsverfahren Bohren vorzugsweise in die Einzelschritte Zentrierbohren, Vorbohren, Aufsenken, Fertigsenken und Entgraten untergliedert, wobei beim Entgraten zwischen einem Entgraten an der Oberseite gebohrter Löcher und einem Entgraten an der Unterseite der gebohrten Löscher unterschieden wird.

Für jeden der Einzelschritte des zu überwachenden Fertigungsverfahrens wird mindestens jeweils eine Signalschablone generiert, wobei jede Signalschablone aus den Steuerbefehlen des Fertigungsprogramms für den jeweiligen Einzelschritt, sowie aus dem jeweiligen Werkzeug, dem verwendeten Material und den Maschinenspezifika rechnerisch und damit theoretisch generiert wird, und wobei jede Signalschablone einem theoretischen Signalverlauf bzw. Sollverlauf eines bei Ausführung des Fertigungsverfahrens messtechnisch erfassbaren Parameters entspricht.

Fig. 1 zeigt für den Einzelschritt Vorbohren des Fertigungsverfahrens Bohren eine aus den Steuerbefehlen des Fertigungsprogramms bzw. NC-Programms rechnerisch generierte Signalschablone 10 bzw. einen theoretischen Signalverlauf über der Zeit t für ein messtechnisch erfassbares Drehmoment M eines Motors der Werkzeugmaschine.

Zur Überwachung eines Fertigungsverfahrens werden während Ausführung der Einzelschritte desselben Signalverläufe bzw. Istverläufe messtechnisch erfasst, und zwar für die Parameter, für welche vorab die Signalschablonen rechnerisch aus den Steuerbefehlen des Fertigungsprogramms generiert wurden.

Der oder jeder gemessene Signalverlauf wird sodann mit der jeweils entsprechenden, rechnerisch generierten Signalschablone verglichen, wobei dann, wenn der gemessene Signalverlauf um mehr als eine bestimmte Toleranz von der Signalschablone abweicht, auf ein qualitativ schlechtes Fertigungsverfahren geschlossen wird.

In Fig. 1 ist neben der rechnerisch ermittelten Signalschablone 10 weiterhin ein gemessener Signalverlauf 11 für den entsprechenden Parameter der Signalschablone 10 gezeigt, nämlich für das Drehmoment M eines Motors der Werkzeugmaschine.

Nach einer vorteilhaften Weiterbildung des erfindungsgemäßen Verfahrens wird die Toleranz jeder Signalschablone durch eine den theoretischen Signalverlauf einhüllende Obergrenze sowie Untergrenze definiert, wobei die Obergrenze und Untergrenze zusammen mit der Signalschablone aus den Steuerbefehlen der Einzelschritte rechnerisch und damit thenretisch generiert wird. In Fig. 1 sind eine die Signalschablone 10 einhüllende Obergrenze sowie Untergrenze aus Gründen einer einfacheren Darstellung nicht dargestellt.

Die Signalschablonen können für solche Parameter berechnet werden, für die separate Sensoren notwendig sind (Dehmomente, Kräfte, Wege, Schwingungsniveaus),vorzugsweise werden aber für solche Parameter des zu überwachenden Fertigungsverfahrens Signalschablonen sowie vorzugsweise Obergrenzen und Untergrenzen für die Signalschablonen generiert, die ohne zusätzliche Sensoren an der Werkzeugmaschine erfasst werden können. Bei einem solchen Parameter handelt es sich z. B. um die Leistungsaufnahme eines Motors der Werkzeugmaschine, die unmittelbar aus der Elektronik der Werkzeugmaschine gewonnen werden kann. In diesem Fall kann dann auf zusätzliche Sensoren verzichtet werden, wodurch das Verfahren besonders kostengünstig und einfach implementiert werden kann.

Die Signalschablone eines jeden Einzelschritts kann in fertigungstechnisch relevante bzw. qualitätsrelevante Abschnitte untergliedert werden, wobei dann insbesondere überwacht wird, dass der gemessene Signalverlauf in diesen qualitätsrelevanten Abschnitten um nicht mehr als eine bestimmte Toleranz von der Signalschablone abweicht.

In Fig. 1 kann die Signalschablone 10 für den Einzelschritt des Vorbohrens des Fertigungsverfahrens Bohren in z. B. die qualitätsrelevanten Abschnitte 12, 13 und 14 untergliedert werden, wobei es sich bei dem Abschnitt 12 um einen sogenannten Luftschnitt, bei dem Abschnitt 13 um das stationäre Vorbohren und bei dem Abschnitt 14 um einen Entspannzyklus handelt. Für jeden dieser Abschnitte kann eine individuelle Toleranz und damit eine individuelle Obergrenze und Untergrenze bestimmt werden.

Wie bereits erwähnt, wird dann, wenn der gemessene Signalverlauf von der rechnerisch ermittelten Signalschablone um mehr als eine bestimmte Toleranz abweicht, auf ein qualitativ schlechtes Fertigungsverfahren geschlossen. Vorzugsweise wird dann das Fertigungsverfahren abgebrochen.

Die rechnerisch ermittelte Signalschablone dient demzufolge als Sollsignalverlauf eines messtechnisch erfassten Parameters eines Einzelschritts des zu überwachenden Fertigungsverfahrens, wobei diese als Sollsignalverlauf dienenden Signalschablone mit einem messtechnisch erfassten Istsignalverlauf des Parameters verglichen wird.

Der Vergleich der rechnerisch ermittelten Signalschablonen mit messtechnisch erfassten Signalverläufen erfolgt vorzugsweise in Echtzeit, kann aber auch offline durchgeführt werden.

Das erfindungsgemäße Verfahren ist insbesondere dann geeignet, wenn zur Messung der Signalverläufe verwendete Sensoren ein Signal mit einem hohen Rauschanteil bereitstellen. Rechnerisch erzeugte Signalschablonen sind weniger kritisch im Hinblick auf messtechnisch erfasste Signalverläufe mit einem hohen Rauschanteil.

## Patentansprüche

1. Verfahren zur qualitätsrelevanten Überwachung eines Fcrtigungsverfahrens, insbcsondere eines spanenden Fertigungsverfahrens wie z. B. des Bohrens, bei welchem ein Signalverlauf (11) mindestens eines Parameters eines Einzelschritts des Fertigungsverfahrens während der Ausführung desselben gemessene wird und der oder jeder gemessene Signal verlauf (11) mit einer Signalschablone (10) verglichen wird, wobei dann, wenn der gemessene Signal verlauf (11) um mehr als eine bestimmte Toleranz von der Signalschablone (10) abweicht, auf ein qualitativ schlechtes Fertigungsverfahren geschlossen wird, **gekennzeichnet durch** die Schritte:
a) Zerlegen des Fertigungsverfahrens in eine Abfolge aus Einzelschritten, die **durch** eine Sequenz von Steuerbefehlen eines Fertigungsprogramms, welches zur Ausführung des Fertigungsverfahrens auf einer Werkzeugmaschine auszuführen ist, definiert werden, und
b) Generieren mindestens einer Signalschablone (14) je Einzelschritt des Fertigungverfahrens, wobei jede Signalschablone (10) aus den Steuerbefehlen des Fertigungsprogramms für den jeweiligen Einzelschritt, sowie aus dem jeweiligen Werkzeug, dem verwendeten Material und den Maschinenspcxifika rechnerisch und damit theoretisch generiert wird, und jede Signalschablone (10) einem theoretischen Signalverlauf eines bei Ausführung des Fertigungsverfahrens messtechnisch erfassbaren Parameters entspricht.

2. Verfahrens nach Anspruch 1,
**dadurch gekennzeichnet,**
**dass** die Toleranz jeder Signalschablone (10) durch eine den theoretische Signalverlauf einhüllende Obergrenze und Untergrenze definiert wird, wobei die Obergrenze und Untergrenze zusammen mit der Signal schablone (10) aus den Steuerbefehlen der Einzelschritte generiert wird.

3. Verfahren nach Anspruch 1 oder 2,
**dadurch gekennzeichnet,**
**dass** für solche Parameter Signaischabionen (10) sowie vorzugsweise entsprechende Obergrenzen und Untergrenzen generiert werden, die ohne zusätzliche Sensoren an der Werkzeugmaschine erfasst werden können.

4. Verfahren nach Anspruch 3,
**dadurch gekennzeichnet,**
**dass** für die Leistungsaufnahme von Motoren der Werkzeugmaschine Signalschablonen (10) sowie vorzugsweise entsprechende Obergrenzen und Untergrenzen generiert werden.

5. Verfahren nach einem der Ansprüche 1 bis 4,
**dadurch gekenntzeichnet,**
**dass** die Signalschablone (10) jedes Einzelschritts in fertigungstechnisch relevante bzw. qualitätsrelevante Abschnitte (12,13,14) untergliedert wird, wobei insbesondere überwacht wird, dass der gemessene Signalverlauf (11) in diesen qualitätsrelevanten Abschnitten (12, 13, 14) nicht um mehr als die bestimmte Toleranz von der Signalschablone (10) abweicht.

6. Verfahren nach einem der Ansprüche 1 bis 5,
**dadurch gekennzeichnet,**
**dass** dann, wenn der gemessene Signalverlauf (11) um mehr als eine bestimmte Toleranz von der Signalschablone (10) abweicht, das Fertigungsverfahren abgebrochen wird.

7. Verfahren nach einem der Ansprüche 1 bis 6,
**dadurch gekennzeichnet,**
**dass** Bohren in die Einzelschritte Zentrierbohren, Vorbohren. Aufscnken, Fertigsenken und Entgraten untergliedert wird.

## Claims

1. Method for quality-relevant monitoring of a manufacturing procedure, in particular of a machining manufacturing procedure such as drilling, wherein a signal course (11) of at least one parameter of an individual step of the manufacturing procedure is measured during the execution of the latter, and the or each measured signal course (11) is compared with a signal template (10), and if the measured signal course (11) differs from the signal template (10) by more than a specified tolerance, a qualitatively bad manufacturing procedure is deduced, **characterized by** the steps of:
a) decomposing the manufacturing procedure into a sequence of individual steps, which are defined by a sequence of control commands of a manufacturing program, which is to be executed on a machine tool to execute the manufacturing procedure, and
b) generating at least one signal template (10) per individual step of the manufacturing procedure, each signal template (10) being generated, computationally and thus theoretically, from the control commands of the manufacturing program for the respective individual step, and from the respective tool, the material used and the specific features of the machine, and each signal template (10) corresponds to a theoretical signal course of a parameter which can be captured metrologically when the manufacturing procedure is executed.

2. Method according to Claim 1,
**characterized in that**
the tolerance of each signal template (10) is defined by an upper limit and a lower limit which envelop the theoretical signal course, the upper limit and lower limit, together with the signal template (10), being generated from the control commands of the individual steps.

3. Method according to Claim 1 or 2,
**characterized in that**
signal templates (10), and preferably corresponding upper limits and lower limits, are generated for such parameters as can be captured without additional sensors on the machine tool.

4. Method according to Claim 3,
**characterized in that**
for the power consumption of motors of the machine tool, signal templates (10) and preferably corresponding upper limits and lower limits are generated.

5. Method according to any one of Claims 1 to 4, **characterized in that**
the signal template (10) of each individual step is subdivided into production-relevant and quality-relevant sections (12, 13, 14), monitoring in particular that the measured signal course (11) in these quality-relevant sections (12, 13, 14) does not differ from the signal template (10) by more than the specified tolerance.

6. Method according to any one of Claims 1 to 5, **characterized in that**
when the measured signal course (11) differs from the signal template (10) by more than a specified tolerance, the manufacturing procedure is aborted.

7. Method according to any one of Claims 1 to 6, **characterized in that**
the drilling is subdivided into the individual steps of spot drilling, pilot drilling, boring, counter boring and deburring.

## Revendications

1. Procédé de contrôle de qualité d'un procédé de fabrication, en particulier un procédé de fabrication par enlèvement de copeaux, tel que le perçage, dans lequel une courbe de signaux (11) d'au moins un paramètre d'une étape individuelle du procédé de fabrication est mesurée pendant la mise en oeuvre de ce dernier et la ou chaque courbe de signaux (11) mesurée est comparée à un modèle de courbe de signaux (10), sachant que lorsque la courbe de signaux (11) mesurée diverge du modèle de courbe de signaux (10) par plus d'une tolérance déterminée, il en est déduit un processus de fabrication de mauvaise qualité, **caractérisé par** les étapes :
a) décomposition du procédé de fabrication en une suite d'étapes individuelles, qui sont définies par une séquence d'instructions de commande d'un programme de fabrication, qui doit être exécuté pour la mise en oeuvre du procédé de fabrication sur une machine-outil, et
b) génération d'au moins un modèle de courbe de signaux (10) par étape individuelle du procédé de fabrication, chaque modèle de courbe de signaux (10) étant généré par calcul et donc théoriquement à partir des instructions de commande du programme de fabrication pour l'étape individuelle respective, ainsi qu'à partir de l'outil respectif, du matériau utilisé et des caractéristiques de la machine, et chaque modèle de courbe de signaux (10) correspondant à une courbe de signaux théorique d'un paramètre pouvant être détecté par la technique de mesure lors de la mise en oeuvre du procédé de fabrication.

2. Procédé selon la revendication 1, **caractérisé en ce que** la tolérance de chaque modèle de courbe de signaux (10) est définie par une limite supérieure et une limite inférieure enveloppant la courbe de signaux théorique, la limite supérieure et la limite inférieure étant générées conjointement avec le modèle de courbe de signaux (10) à partir des instructions de commande des étapes individuelles.

3. Procédé selon la revendication 1 ou 2, **caractérisé en ce que** pour de tels paramètres sont générées des modèles de courbe de signaux (10), ainsi que, de préférence, des limites supérieures et des limites inférieures correspondantes, qui peuvent être enregistrées sans capteurs supplémentaires sur la machine-outil.

4. Procédé selon la revendication 3, **caractérisé en ce que** pour la puissance nécessaire des moteurs de la machine-outil sont générées des modèles de courbe de signaux (10) ainsi que, de préférence, des limites supérieures et des limites inférieures correspondantes.

5. Procédé selon l'une quelconque des revendications 1 à 4, **caractérisé en ce que** le modèle de courbe de signaux (10) de chaque étape individuelle est subdivisé en sections (12, 13, 14) significatives de la technique de fabrication ou significatives de la qualité, sachant qu'il est contrôlé en particulier que, dans ces sections (12, 13, 14) significatives de la qualité, la courbe de signaux (11) mesurée ne diverge pas davantage du modèle de courbe de signaux (10) que la tolérance déterminée.

6. Procédé selon l'une quelconque des revendications 1 à 5, **caractérisé en ce que**, lorsque la courbe de signaux (11) mesurée diverge du modèle de courbe de signaux (10) par plus d'une tolérance déterminée, le procédé de fabrication est interrompu.

7. Procédé selon l'une quelconque des revendications 1 à 6, **caractérisé en ce que** le perçage est subdivisé dans les étapes individuelle : perçage pour centrage, perçage d'un avant-trou, alésage au foret aléseur, alésage de finition et ébavurage.
